# EUROPÄISCHE PATENTANMELDUNG

(11) **EP 3 978 100 A1**
(43) Veröffentlichungstag der Anmeldung: **06.04.2022**
(21) Anmeldenummer: 20199188.2
(22) Anmeldetag: 30.09.2020
(51) Int. Cl.: B01D 53/94, B01J 23/42, B01J 35/00, F01N 3/10

(54) **BISMUT ENTHALTENDER GEZONTER DIESELOXIDATIONSKATALYSATOR**

(71) Anmelder: UMICORE AG & Co. KG, 63457 Hanau-Wolfgang (DE)
(72) Erfinder: DE TONI, Andrea, 63450 Hanau (DE); WOERZ, Anke, 60435 Frankfurt (DE)

(57) **Zusammenfassung**

Die vorliegende Erfindung betrifft einen Katalysator, der ein Trägersubstrat mit einer sich zwischen den Enden a und b erstreckenden Länge L, sowie zwei Materialzonen A und B umfasst, wobei Materialzone A Bismut umfasst.

## Beschreibung

Die vorliegende Erfindung betrifft einen gezonten Dieseloxidationskatalysator, der mehrere katalytisch aktive Materialzonen umfasst, wobei eine Materialzone Bismut enthält.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Kohlenwasserstoffe (HC) und Kohlenmonoxid (CO) können mit Hilfe von Dieseloxidationskatalysatoren (DOC) oxidiert werden. Herkömmliche Dieseloxidationskatalysatoren enthalten insbesondere Platin und/oder Palladium auf einem geeigneten Trägeroxid, zum Beispiel Aluminiumoxid.

Ein bekanntes Verfahren zur Entfernung von Stickoxiden aus Abgasen in Gegenwart von Sauerstoff ist die selektive katalytische Reduktion (SCR) mittels Ammoniak an einem geeigneten Katalysator. Bei diesem Verfahren werden die aus dem Abgas zu entfernenden Stickoxide mit Ammoniak zu Stickstoff und Wasser umgesetzt.

Rußpartikel können sehr effektiv mit Hilfe von Dieselpartikelfiltern (DPF) aus dem Abgas entfernt werden, wobei sich Wandflussfilter aus keramischen Materialien besonders bewährt haben. Partikelfilter können auch mit katalytisch aktiven Beschichtungen versehen werden. So beschreibt beispielsweise die EP1820561 A1 die Beschichtung eines Dieselpartikelfilters mit einer Katalysatorschicht, die das Abbrennen der gefilterten Rußpartikel erleichtert. Dieselpartikelfilter können auch mit SCR-Katalysatoren beschichtet sein und werden dann kurz als SDPF bezeichnet.

Zur Nachbehandlung von Abgas von Dieselmotoren werden Abgasnachbehandlungssysteme eingesetzt, die aus zwei oder mehreren der oben genannten Bausteinen zusammengesetzt sind. Ein wichtiger Bestandteil eines solchen Systems ist der Dieseloxidationskatalysator. Seine Aufgabe ist vor allem die Umsetzung von Kohlenmonoxid und Kohlenwasserstoffen, aber auch die Oxidation von Stickstoffmonoxid (NO) zu Stickstoffdioxid (NO₂), das von abströmseitig angeordneten Bauteilen, wie DPF, SCR und SDPF benötigt wird.

Zur Erfüllung kommender Gesetzgebungen sind Abgasnachbehandlungssysteme notwendig, die die genannten Schadstoffe über ein breites Betriebsfenster umsetzen. In diesem Zusammenhang ist die Entwicklung und Optimierung eines Dieseloxidationskatalysators, der einerseits Kohlenmonoxid und Kohlenwasserstoffe bei möglichst niedrigen Temperaturen umsetzt und andererseits über den gesamten Betriebsbereich genügend Stickstoffdioxid liefert, eine technische Herausforderung.

Es wurde nun gefunden, dass gezonte Dieseloxidationskatalysatoren, die eine Bismut enthaltende Materialzone aufweisen, dieser technischen Herausforderung gerecht werden.

Dieseloxidationskatalysatoren, die Bismut enthalten, sind bereits bekannt. So beschreibt die US 5,911,961 einen Katalysator, bei dem Platin und Bismut auf Titandioxid geträgert sind.

Die EP 1 927 399 A2 offenbart ein Aluminiumoxid und Bismut umfassendes Trägermaterial, das Platin trägt.

Die US 2003/027719 betrifft einen Oxidationskatalysator, der Palladium und Silber und als nächsten Nachbarn von Palladium Bismut enthält.

Die US 2012/302439 offenbart einen Palladium-Gold-Katalysator, der mit Bismut und/oder Mangan dotiert ist.

Die WO 2017/064498 A1 offenbart einen Bismut oder Antimon, sowie ein Platingruppenmetall enthaltenden Oxidationskatalysator.

Die vorliegende Erfindung betrifft einen Katalysator, der ein Trägersubstrat mit einer sich zwischen den Enden a und b erstreckenden Länge L, sowie zwei Materialzonen A und B umfasst, wobei
- Materialzone A sich ausgehend vom Ende a über einen Teil der Länge L erstreckt und Bismut, sowie Platin und kein Palladium oder Platin und Palladium umfasst;
- Materialzone B sich ausgehend vom Ende b über einen Teil der Länge L erstreckt und Platin und kein Bismut umfasst;
wobei L_{A} + L_{B} = L gilt, wobei L_{A} die Länge der Materialzone A und L_{B} die Länge der Materialzone B ist.

Materialzone A umfasst bevorzugt Platin und kein Palladium. Die Anwesenheit von Palladium ist aber nicht ausgeschlossen, wobei in diesem Fall das Gewichtsverhältnis von Platin und Palladium 20:1 bis 1:5, bevorzugt 14:1 bis 2:1 beträgt.

Platin bzw. Platin und Palladium liegen in Materialzone A bevorzugt in Mengen von 10 bis 200, bevorzugt 10 bis 100 und besonders bevorzugt 15 bis 50 g/ft³ vor.

Platin bzw. Platin und Palladium in Materialzone A liegen in der Regel auf einem Trägermaterial vor. Als Trägermaterial kommen alle dem Fachmann für diesen Zweck geläufigen Materialien in Betracht. Sie weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid, Cer/Titan-Mischoxide, sowie Mischungen oder Mischoxide von mindestens zwei dieser Materialien. Bevorzugt sind Aluminiumoxid, Cer/Titan-Mischoxide, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Sofern ein Aluminium/Silizium-Mischoxid verwendet wird, so weist es insbesondere einen Gehalt an Siliziumoxid von 5 bis 30, bevorzugt von 5 bis 15 Gew.-% auf.

Ein besonders bevorzugtes Trägermaterial für Platin bzw. Platin und Palladium ist das weiter unten beschriebene Kompositoxid aus Aluminium und Bismut.

Materialzone A umfasst Bismut beispielsweise in Form von Bismutoxid (Bi₂O₃), insbesondere aber in Form eines Kompositoxides mit Aluminium oder mit Aluminium und Silizium vor, wobei der Siliziumgehalt beispielsweise 5 bis 30, bevorzugt 5 bis 15 Gew.-%, bezogen auf das Gewicht von Aluminium- und Siliziumoxid, beträgt. Bismut liegt beispielsweise in einer Menge von 1 bis 15, bevorzugt 2 bis 7 Gew.-%, bezogen auf das Kompositoxid und berechnet als elementares Bismut vor. Wie oben beschrieben dient dieses Kompositoxid besonders bevorzugt als Trägermaterial für das Platin bzw. für das Platin und Palladium.

Materialzone B umfasst Platin und kein Bismut und bevorzugt auch kein Palladium. Die Anwesenheit von Palladium ist aber nicht ausgeschlossen, wobei in diesem Fall das Gewichtsverhältnis von Platin und Palladium insbesondere 20:1 bis 1:1, bevorzugt 14:1 bis 2:1 beträgt.

Platin bzw. Platin und Palladium liegen in Materialzone B bevorzugt in Mengen von 10 bis 200, bevorzugt 10 bis 100 und besonders bevorzugt 15 bis 50 g/ft³ vor.

Platin bzw. Platin und Palladium in Materialzone B liegen in der Regel auf einem Trägermaterial vor. Als Trägermaterial kommen alle dem Fachmann für diesen Zweck geläufigen Materialien in Betracht. Sie weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid, Cer/Titan-Mischoxide, sowie Mischungen oder Mischoxide von mindestens zwei dieser Materialien.

Bevorzugt sind Aluminiumoxid, Cer/Titan-Mischoxide,

Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Sofern ein Aluminium/Silizium-Mischoxid verwendet wird, so weist es insbesondere einen Gehalt an Siliziumoxid von 5 bis 30, bevorzugt von 5 bis 15 Gew.-% auf.

Materialzone B kann ein Material zur Speicherung von Kohlenwasserstoffen, insbesondere bei Temperaturen, die unter dem Light-off der Materialzone B für die Oxidation von Kohlenwasserstoffen liegt. Solche Speichermaterialien sind insbesondere Zeolithe, deren Kanäle groß genug sind, um Kohlenwasserstoffe aufnehmen zu können. Bevorzugte Zeolithe zu diesem Zweck gehören dem Strukturtyp BEA an.

Die Längen der Materialzonen L_{A} und L_{B} entsprechen zusammen der Länge L des Trägersubstrates. Dabei weist die Materialzone L_{A} insbesondere eine Länge von 20 bis 80%, bevorzugt 40 bis 60% der Länge L auf. In einer bevorzugten Ausführungsform erstrecken sich L_{A} und L_{B} jeweils über 50% der Länge L.

Der erfindungsgemäße Katalysator umfasst einen Tragkörper. Dieser kann ein Durchflusssubstrat oder ein Wandflussfilter sein.

Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen sind und die durch poröse Wände getrennt sind. Ein Durchflusssubstrat unterscheidet sich von einem Wandflussfilter insbesondere darin, dass die Kanäle der Länge L an seinen beiden Enden offen sind.

Wandflussfilter weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.

In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Durchflusssubstrate sind dem Fachmann ebenso wie Wandflussfilter bekannt und sind am Markt erhältlich. Sie bestehen beispielsweise aus Silicium-Carbid, Aluminium-Titanat oder Cordierit.

Der erfindungsgemäße Katalysator umfasst in der Regel außer Platin, Palladium und Bismut kein weiteres Metall, insbesondere kein Silber, Gold, Kupfer und Eisen.

In einer bevorzugten Ausführungsform betrifft die vorliegende Erfindung einen Katalysator, der ein Trägersubstrat mit einer sich zwischen den Enden a und b erstreckenden Länge L, sowie zwei Materialzonen A und B umfasst, wobei
- Materialzone A sich ausgehend vom Ende a über 40 bis 60 % der Länge L erstreckt und Platin geträgert auf einem Kompositoxid aus Aluminium und Bismut oder aus Aluminium, Silizium und Bismut umfasst; und
- Materialzone B sich ausgehend vom Ende b über 40 bis 60 % der Länge L erstreckt und Platin geträgert auf einem Trägeroxid umfasst;
wobei L_{A} + L_{B} = L gilt, wobei L_{A} die Länge der Materialzone A und L_{B} die Länge der Materialzone B ist.

Die Materialzonen A und B liegen üblicherweise in Form von Beschichtungen auf dem Tragkörper vor.

Erfindungsgemäße Katalysatoren, bei denen die Materialzonen A und B in Form von Beschichtungen auf dem Trägersubstrat vorliegen, können nach dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination). Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden, die die Kanäle des Wandflussfilters bilden, liegen (auf-Wand-Beschichtung). Die mittlere Teilchengröße der zu beschichtenden Materialien kann aber auch so gewählt werden, dass sich diese in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße der der zu beschichtenden Materialien klein genug sein, um in die Poren des Wandflussfilters einzudringen.

In einer anderen Ausführungsform der vorliegenden Erfindung wird ein Trägersubstrat verwendet, das aus gewellten Blättern aus inerten Materialien aufgebaut ist. Solche Trägersubstrate sind dem Fachmann als "corrugated substrate" bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.

Substrate aus gewellten Blättern können direkt mit den Materialien A und B beschichtet werden, vorzugsweise werden sie aber zunächst mit einem inerten Material, zum Beispiel Titandioxid, und erst dann mit dem katalytischen Material beschichtet.

Soweit die erfindungsgemäßem Katalysatoren Kompositoxide aus Aluminium und Bismut oder Aluminium, Silizium und Bismut umfassen, so kann das Kompositoxid beispielsweise erhalten werden durch Inkontaktbringen von Aluminiumoxid oder eines mit Silizium stabilisierten Aluminiumoxides mit einer wässrigen Lösung eines Bismutsalzes und anschließendes Trocknen und Kalzinieren. Das Inkontaktbringen von Aluminiumoxid bzw. mit Silizium stabilisiertem Aluminiumoxid mit einer wässrigen Lösung eines Bismutsalzes kann mit Vorteil durch Besprühen des Aluminiumoxides mit der wässrigen Lösung des Bismutsalzes in einem Mischer erfolgen. Geeignete Mischer sind dem Fachmann bekannt. Beispielsweise sind Pulvermischer oder Vorrichtungen zur Sprühtrocknung geeignet.

Der erfindungsgemäße Katalysator eignet sich in hervorragender Weise als Dieseloxidationskatalysator, der Kohlenmonoxid und Kohlenwasserstoffe auch bei niedrigen Temperaturen effizient umsetzt, der aber auch für abströmseitig angeordnete Katalysatoren, wie Partikelfilter und SCR-Katalysatoren, ausreichend Stickstoffdioxid bildet. Insbesondere hat sich gezeigt, dass der erfindungsgemäße Katalysator im relevanten Temperaturbereich mehr Stickstoffdioxid bildet wie ein Vergleichskatalysator, der in der Materialzone A kein Bismut enthält und sonst identisch ist.

Somit betrifft die vorliegende Erfindung auch ein Verfahren zur Reinigung von Abgasen von Kraftfahrzeugen, die mit mager betriebenen Motoren betrieben werden, dadurch gekennzeichnet, dass das Abgas über einen oben beschriebenen Katalysator geleitet wird, wobei das Abgas am Ende a in den Katalysator ein- und beim Ende b aus dem Katalysator austritt.

Die vorliegende Erfindung betrifft daneben auch ein Abgassystem, das einen oben beschriebenen Katalysator umfasst, an dessen Ende b sich ein oder mehrere weitere Katalysatoren anschließen, die ausgewählt sind aus der Reihe bestehend aus Dieselpartikelfilter, mit einem SCR-Katalysator beschichteter Dieselpartikelfilter, mit einer die Rußzündtemperatur herabsetzenden Beschichtung beschichteter Dieselpartikelfilter und einem auf einem Durchflusssubstrat befindlicher SCR-Katalysator.

Die oben für die Materialzonen A und B beschriebenen optionalen und/oder bevorzugten Ausführungsformen gelten analog auch bezüglich des erfindungsgemäßen Verfahrens und des erfindungsgemäßem Abgassystems.

Der SCR-Katalysator im erfindungsgemäßen Abgassystem, unabhängig davon, ob er auf einem Partikelfilter oder einem Durchflusssubstrat vorliegt, kann prinzipiell ausgewählt sein aus allen in der SCR-Reaktion von Stickoxiden mit Ammoniak aktiven Katalysatoren, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetall-ausgetauschten Zeolithen.

In Ausführungsformen der vorliegenden Erfindung werden SCR-Katalysatoren, die einen kleinporigen Zeolithen mit einer maximalen Ringgröße von acht tetraedrischen Atomen und ein Übergangsmetall enthalten, eingesetzt. Solche SCR-Katalysatoren sind beispielsweise in WO2008/106519 A1, WO2008/118434 A1 und WO2008/132452 A2 beschrieben.

Daneben können aber auch groß- und mittelporige Zeolithe verwendet werden, wobei insbesondere solche vom Strukturtyp BEA in Frage kommen. So sind Eisen-BEA und Kupfer-BEA von Interesse.

Besonders bevorzugte Zeolithe gehören den Gerüsttypen BEA, AEI, AFX, CHA, KFI, ERI, LEV, MER oder DDR an und sind besonders bevorzugt mit Kobalt, Eisen, Kupfer oder Mischungen aus zwei oder drei dieser Metalle ausgetauscht.

Unter den Begriff Zeolithe fallen hier auch Molsiebe, die bisweilen auch als "zeolithähnliche" Verbindungen bezeichnet werden. Molsiebe sind bevorzugt, wenn sie einem der oben genannten Gerüsttypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.

Auch diese sind insbesondere dann bevorzugt, wenn sie mit Kobalt, Eisen, Kupfer oder Mischungen aus zwei oder drei dieser Metalle ausgetauscht sind.

Bevorzugte Zeolithe sind weiterhin solche, die einen SAR (silica-to-alumina ratio)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also beispielsweise als Fe₂O₃ oder CuO.

Bevorzugte Ausführungsformen der vorliegenden Erfindung enthalten als SCR-Katalysatoren mit Kupfer, Eisen oder Kupfer und Eisen ausgetauschte Zeolithe oder Molsiebe vom Beta-Typ (BEA), Chabazit-Typ (CHA), AEI, AFX oder vom Levyne-Typ (LEV). Entsprechende Zeolithe oder Molsiebe sind beispielsweise unter den Bezeichnungen ZSM-5, Beta, SSZ-13, SSZ-62, Nu-3, ZK-20, LZ-132, SAPO-34, SAPO-35, AIPO-34 und AIPO-35 bekannt, siehe etwa US 6,709,644 und US 8,617,474.

In einer Ausführungsform des erfindungsgemäßen Abgassystems befindet sich vor dem SCR-Katalysator eine Einspritzeinrichtung für Reduktionsmittel.

Die Einspritzvorrichtung kann vom Fachmann beliebig gewählt werden, wobei geeignete Vorrichtungen der Literatur entnommen werden können (siehe etwa T. Mayer, Feststoff-SCR-System auf Basis von Ammoniumcarbamat, Dissertation, TU Kaiserslautern, 2005, sowie EP 1 561 919 A1). Der Ammoniak kann über die Einspritzvorrichtung als solches oder in Form einer Verbindung in den Abgasstrom eingebracht werden, aus der bei den Umgebungsbedingungen Ammoniak gebildet wird. Als solche kommen beispielsweise wässrige Lösungen von Harnstoff oder Ammoniumformiat in Frage, ebenso wie festes Ammoniumcarbamat. In der Regel wird das Reduktionsmittel bzw. ein Vorläufer davon in einem mitgeführten Behälter, der mit der Einspritzvorrichtung verbunden ist, vorrätig gehalten.

### Vergleichsbeispiel 1

Ein handelsübliches Durchflusssubstrat aus Cordierit wurde auf seiner gesamten Länge nach einem üblichen Verfahren mit einem Washcoat beschichtet, der Platin und Palladium im Gewichtsverhältnis 12:1, geträgert auf mit Silizium dotiertem Aluminiumoxid, enthielt.

Die Beladungsmenge des fertigen Katalysators betrug 15 g/ft³ Platin und Palladium bei 70 g/l Washcoat. Daraus wurde ein Bohrkern mit einem Durchmesser von 1" und einer Länge von 3" entnommen.

Der Katalysator wird nachstehend V1 genannt.

### Vergleichsbeispiel 2

Ein handelsübliches Durchflusssubstrat aus Cordierit wurde auf seiner gesamten Länge nach einem üblichen Verfahren mit einem Washcoat beschichtet, der Platin, geträgert auf mit 3 Gew.-% Bismut dotiertem Aluminiumoxid, enthielt.

Die Beladungsmenge des fertigen Katalysators betrug 15 g/ft³ Platin und Palladium bei 70 g/l Washcoat. Daraus wurde ein Bohrkern mit einem Durchmesser von 1" und einer Länge von 3" entnommen.

Der Katalysator wird nachstehend V2 genannt.

### Beispiel 1

Die gemäß Vergleichsbeispiel 1 und Vergleichsbeispiel 2 erhaltenen Bohrkerne wurden jeweils in zwei Teile mit einer Länge von je 1,5" geteilt. Je ein Teil von Vergleichsbeispiel 1 und Vergleichsbeispiel 2 wurde zu einem Bohrkern gemäß Beispiel 1 kombiniert. Dieser weist somit eine Länge von 3" auf und ist mit 15 g/ft³ Edelmetall bei 70 g/l Washcoat beschichtet. Der Katalysator wird nachstehend B1 genannt.

### Vergleichstests

Mit den Bohrkernen gemäß Vergleichsbeispielen 1 und 2, sowie Beispiel 1 wurden in einer Modellgasanlage Standard Light off Untersuchungen (10 K/min; 60.000 h⁻¹) bei zwei verschiedenen Testbedingungen a) und b) durchgeführt.

| | Testbedingung a) | Testbedingung b) |
|---|---|---|
| GHSV [h¹] | 60000 | 60000 |
| CO [ppm] | 250 | 250 |
| NO [ppm] | 750 | 750 |
| HC [ppm] | 0 | 60 |
| O₂ [Vol%] | 10 | 10 |
| H₂O [Vol%] | 7,5 | 7,5 |
| CO2 [Vol%] | 7 | 7 |
| N2 [Vol%] | Rest | Rest |

Es wird die NO₂-Bildung bei den Katalysatoreintrittstemperaturen 150, 175 und 200, bei Testbedingung b) zusätzlich auch bei 225°C betrachtet, weil dieser Temperaturbereich für nachfolgende SCR-Katalysatoren besonders relevant ist. Dabei ist zu berücksichtigen, dass bei der schnellen SCR Reaktion (NO + NO₂ + 2NH₃ → 2N₂ + 3H₂O) jedes NO₂ ein weiteres NO mit einbindet. Wenn also im kritischen Temperaturbereich zum Beispiel 5% mehr NO₂ gebildet wird, bedeutet dies eine Steigerung des SCR Umsatzes um 10%.

Im Übrigen werden die Bohrkerne bei zwei verschiedenen Alterungszuständen verglichen: Alterung 1: 16 Stunden bei 650°C und Alterung 2: 16 Stunden bei 750°C, jeweils in 10% O₂, 10% H₂O, Rest: N₂.

Es wurden die Ergebnisse gemäß Tabelle 1 erhalten (NO₂-Bildung in %):

**Tabelle 1**

| Testbedingung a) | | | | | | | | |
|---|---|---|---|---|---|---|---|---|
| Alterung 1 | | | | | Alterung 2 | | | |
| | | 150°C | 175°C | 200°C | 150°C | 175°C | 200°C | |
| V1 | | 0 | 4 | 23,9 | 0 | 0 | 18 | |
| V2 | | 2,7 | 8 | 17 | 0,6 | 4,2 | 11,6 | |
| B1 | | 2,4 | 8,9 | 20,4 | 2,9 | 9,3 | 18,5 | |
| | | | | | | | | |

| | Testbedingung b) | | | | | | | |
|---|---|---|---|---|---|---|---|---|
| | Alterung 1 | | | | Alterung 2 | | | |
| | 150°C | 175°C | 200°C | 225°C | 150°C | 175°C | 200°C | 225°C |
| V1 | 0 | 0 | 5,8 | 26,5 | 0 | 0 | 0,4 | 18,8 |
| V2 | 0 | 0 | 11,3 | 16,7 | 0 | 0 | 2,7 | 12,5 |
| B1 | 0 | 0 | 7,7 | 22,3 | 0 | 0 | 6,3 | 17,7 |

Die Ergebnisse zeigen, dass der erfindungsgemäße Katalysator B1 im Vergleich mit den Vergleichskatalysatoren V1 und V2 in der Zusammenschau beider Testbedingungen und der beiden Alterungszustände die bessere NO₂-Bildung zeigt.

## Patentansprüche

1. Katalysator, der ein Trägersubstrat mit einer sich zwischen den Enden a und b erstreckenden Länge L, sowie zwei Materialzonen A und B umfasst, wobei
• Materialzone A sich ausgehend vom Ende a über einen Teil der Länge L erstreckt und Bismut, sowie Platin und kein Palladium oder Platin und Palladium umfasst;
• Materialzone B sich ausgehend vom Ende b über einen Teil der Länge L erstreckt und Platin und kein Bismut umfasst;
wobei L_{A} + L_{B} = L gilt, wobei L_{A} die Länge der Materialzone A und L_{B} die Länge der Materialzone B ist.

2. Katalysator gemäß Anspruch 1, **dadurch gekennzeichnet, dass** Materialzone A Platin und kein Palladium umfasst.

3. Katalysator gemäß Anspruch 1, **dadurch gekennzeichnet, dass** Materialzone A Platin und Palladium im Gewichtsverhältnis 10:1 bis 1:5 umfasst.

4. Katalysator gemäß einem oder mehreren der Ansprüche 1 bis 3, **dadurch gekennzeichnet, dass** Materialzone A Bismut in Form von Bismutoxid (Bi₂O₃) umfasst.

5. Katalysator gemäß einem oder mehreren der Ansprüche 1 bis 3, **dadurch gekennzeichnet, dass** Materialzone A Bismut in Form eines Kompositoxides mit Aluminium oder mit Aluminium und Silizium umfasst.

6. Katalysator gemäß Anspruch 5, **dadurch gekennzeichnet, dass** Bismut im Kompositoxid mit Aluminiumoxid in einer Menge von 1 bis 15 Gew.-%, bezogen auf das Kompositoxid und berechnet als elementares Bismut vorliegt.

7. Katalysator gemäß Anspruch 5 und/oder 6, **dadurch gekennzeichnet, dass** das Kompositoxid aus Aluminium und Bismut oder aus Aluminium, Silizium und Bismut Trägermaterial für das Platin ist.

8. Katalysator gemäß einem oder mehreren der Ansprüche 1 bis 7, **dadurch gekennzeichnet, dass** Materialzone B kein Palladium umfasst.

9. Katalysator gemäß einem oder mehreren der Ansprüche 1 bis 8, **dadurch gekennzeichnet, dass** die Materialzone L_{A} eine Länge von 20 bis 80% der Länge L aufweist.

10. Katalysator gemäß einem oder mehreren der Ansprüche 1 bis 9, **dadurch gekennzeichnet, dass** er ein Trägersubstrat mit einer sich zwischen den Enden a und b erstreckenden Länge L, sowie zwei Materialzonen A und B umfasst, wobei
• Materialzone A sich ausgehend vom Ende a über 40 bis 60 % der Länge L erstreckt und Platin geträgert auf einem Kompositoxid aus Aluminium und Bismut oder aus Aluminium, Silizium und Bismut umfasst; und
• Materialzone B sich ausgehend vom Ende b über 40 bis 60 % der Länge L erstreckt und Platin geträgert auf einem Trägeroxid umfasst;
wobei L_{A} + L_{B} = L gilt, wobei L_{A} die Länge der Materialzone A und L_{B} die Länge der Materialzone B ist.

11. Verfahren zur Reinigung von Abgasen von Kraftfahrzeugen, die mit mager betriebenen Motoren betrieben werden, **dadurch gekennzeichnet, dass** das Abgas über einen Katalysator gemäß einem oder mehreren der Ansprüche 1 bis 10 geleitet wird, wobei das Abgas am Ende a in den Katalysator ein- und beim Ende b aus dem Katalysator austritt.

12. Abgassystem, das
a) einen Katalysator gemäß einem oder mehreren der Ansprüche 1 bis 10 und
b) einen SCR-Katalysator umfasst.
